# EUROPEAN PATENT APPLICATION

(11) **EP 0 982 673 A2**
(43) Date of publication of application: **01.03.2000**
(21) Application number: 99116132.4
(22) Date of filing: 19.08.1999
(51) Int. Cl.: G06F 17/60

(54) **Vehicle repair cost estimating system**

(30) Priority: 21.08.1998 JP 23608098; 27.01.1999 JP 1909799
(71) Applicant: TSUBASA SYSTEM CO. LTD., Tokyo (JP)
(72) Inventor: Sakai, Michimoto, Tokyo (JP); Uegaki, Tateo, Miyagi (JP)
(74) Representative: Schwabe - Sandmair - Marx

(57) **Abstract**

A vehicle repair cost estimating system. A memory stores division data as vehicle attribute data, the division data set each region of a vehicle for dividing each of the regions into respective areas based on a predetermined condition and set a repair condition corresponding to each of the areas. A calculating device specifies a damaged position of the vehicle, determines to which area set in each region the specified damaged position belongs, and calculates a repair cost based on repair condition data of the determined area.

## Description

### BACKGROUND OF THE INVENTION

### 1. Field of the Invention

The present invention relates to a system for estimating a repair cost of a vehicle which is damaged in an accident or the like.

### 2. Prior Art

In general, when a vehicle damaged in an accident or as a result of mischief is to be repaired, a staff of an automobile repair shop determines a position and a range to be applied with repair, selects parts required for the repair, calculates a wage of a worker who carries out repair, and prepares work instructions or an estimate sheet.

In order to shorten time required to determine parts required for the repair and to calculate prices of the parts, a repair estimate preparing system by computer processing utilizing a database on the parts supplied from a storage medium such as a CD-ROM has come into use.

It is true that the time required to prepare the estimate sheet or the work instructions can be shortened by using such a repair estimate preparing system, but selection of work items and specification of replacement parts largely depend on judgement of an estimating worker or the like, and thus, the time required to prepare the estimate sheet or the work instructions may be different depending on practical experience of the estimating worker in many cases.

If a process of preparation of the estimate sheet or the work instructions is considered, the preparation starts with work of specifying a damaged position, a damaged area, and a degree of damage of the vehicle in both cases of manual preparation and preparation by utilizing a computer estimating system. However, such work is carried out by guesswork based on experience of a skilled estimating worker in many cases.

In other words, the estimate sheet can be prepared relatively easily in some cases if a part of the damaged portion is to be replaced. However, in a case involving sheet-metal work of an exterior by embossing by using a hammer, for example, difficulty of and time required for the work are different depending on the damaged position, the damaged area, or the degree of damage. Therefore, it is difficult for an unskilled worker to prepare an accurate estimate sheet.

The unskilled worker may carry out a rough damage specifying work based on a visual inspection only and it has been difficult for the worker to accurately specify damage even at much expense in time and effort.

Even for a skilled estimating worker, because a calculation based on intricately generalized index numbers which are different depending on the damaged position and the degree of damage is normally required in a calculation of a cost of coating, it has been difficult to carry out quantitative estimation in a short time.

The present inventors have found that a reasonable charge which satisfies economy can be calculated in the vehicle repair cost estimation by estimating in the light of the following requirements: rationality in the first place (for example, if the repair is carried out by a rational method and by following a rational procedure or if an easier repairing method is selected for an equivalent repair result); and secondly, consistency (for example, if repair of a damaged portion is consistent with that of another damage portion). If the two requirements are satisfied, the most preferable economy can be achieved in carrying out the repair work and a proper estimation result can be obtained.

The present invention has been accomplished with the above matters in view, and an object of the present invention is to provide a system for easily carrying out an accurate estimation according to a position, a degree, or the like of damage.

Another object is to provide a system for easily form an estimation for carrying out repair work with preferable economy by satisfying the conditions of rationality and consistency.

Yet another object is to provide a system for enabling a person (e.g., a user who receives the estimate sheet) without expert knowledge to easily evaluate detail of the estimation.

### SUMMARY OF THE INVENTION

The first gist of the present invention will be described below. A system for estimating a repair cost of the invention comprises an input device for inputting data of the vehicle to be repaired, a memory for storing vehicle attribute data, a display for displaying each of the data, and a calculating device for searching the memory for the vehicle attribute data corresponding to the input data of the vehicle to be repaired so as to display the vehicle attribute data on the display. The memory stores division data as the vehicle attribute data, the division data being set for each region of the vehicle for dividing each region into respective areas based on a predetermined condition and for setting a repair condition corresponding to each area. The calculating device has specifying means for specifying a damaged position of the vehicle, determining means for determining to which area set in each region the specified damaged position belongs, and estimating means for calculating the repair cost based on repair condition data of the area determined by the determining means.

The second gist of the invention will be described below. A system for estimating a repair cost of the invention comprises an input device for inputting data of the vehicle to be repaired, a memory for storing vehicle attribute data including division data set for each region of the vehicle for dividing each region into respective areas based on a predetermined condition and for setting a repair condition corresponding to each area, adjacent region data for setting which region is adjacent to each region, and vehicle specification data including image data of each region, and a display for displaying each data. The present system comprises a calculating device having specifying means for specifying a damaged position of the vehicle, determining means for determining to which area set in each region the specified damaged position belongs, and estimating means for calculating the repair cost based on repair condition data of the area determined by the determining means. The calculating device searches the memory for the vehicle attribute data corresponding to the data of the vehicle to be repaired inputted by the input device so as to display the image data of the region to which the damaged position specified by the specifying means belongs on the display and displays the image data of adjacent region with the image data of the damaged region when the repair condition data of the area determined by the determining means includes work data of the adjacent region.

According to the invention, the vehicle attribute data corresponding to the data of the vehicle to be repaired and stored in advance in the memory is searched based on the data of the vehicle to be repaired inputted by the input device and the data of the vehicle to be repaired and the vehicle attribute data are displayed on the display. The image data of the region to which the damaged position belongs is displayed on the display.

By designating on the vehicle attribute data displayed on the display the mark data stored in the memory and corresponding to the kind of the damage of the vehicle to be repaired, the kind of the damage of the vehicle to be repaired is specified.

In specifying the kind of the damage, the mark data is displayed on the vehicle attribute data displayed on the display so as to specify the position of the damage by the specifying means. By freely changing a size of the mark data, the area of the damage in addition to the position of the damage can be specified.

The calculating device determines to which area defined by the division data the specified damaged portion belongs by the determining means and estimates the repair cost of the damaged portion in light of the repair condition of the area by the estimating means. When the calculating device recognizes the repair condition, the image data of the adjacent region is displayed with the image data of the region on the display when the repair condition data of the area determined by the determining means includes the work data of the adjacent region.

In making estimation, a coating range in carrying out coating is specified, a coating color of the damaged position is specified, a coating method is specified, and detailed repair cost estimation is carried out by adding up wages of the work, and costs of parts, material, and the like.

If the position and area of the damage are specified, next, the region (a range and a part) influenced by impact of damage, a sheet-metal area of the damaged region, a sheet-metal position in the damaged region, a range, a color, and a method of coating can be specified to estimate the repair cost.

The calculating device can use at least one of the vehicle specification data, part data, coating color data, coating method data, data of a wage required for sheet-metal repair, and data of a wage required for replacement or repair of a part which correspond to respective vehicle types as the vehicle attribute data.

The calculating device may estimate the repair cost by using the mark data with reference to the vehicle attribute data, separately display each work for refit or replacement in respective ranks, and display the repair costs corresponding to respective work of refit, replacement, and the like independently from each other.

A plurality of cases of refit work in respective ranks, replacement work in respective ranks, or repair costs in respective ranks may be displayed at the same time.

When the damaged position is specified, each region of the vehicle may be specified or a position which is a part of each region may be specified.

If the damaged portion is at a predetermined damaged position in specifying the damaged position, it is possible to estimate the repair cost by increasing or decreasing a standard repair cost. This is because the repair work is difficult depending on the damaged region or a center portion and an end portion of the same region may be different from each other in difficulty of sheet-metal work or coating work in some cases. For example, at an end portion of a shell panel, time or a cost of material may be increased as compared with a standard repair cost in order to harmonize a color of the end portion with a coating color of an adjacent panel.

According to the invention, accurate estimation according to the position, extent, and the like of the damage can be carried out easily. Because the damaged region and the region to which work is possible to be applied in association with repair of the damaged region are displayed on the screen at the same time before estimation, it is easier for an operator or the like to carry out estimation and to understand the estimation work.

It is possible to easily form estimation for carrying out repair work with favorable economy while satisfying requirements of rationality and consistency.

It is possible to easily and accurately specify detail (kind) of the damage.

It is possible to easily estimate the repair cost or to specify detail of the repair based on the specified damage data.

Furthermore, a person without expert knowledge (i.e., a user who receives an estimate sheet or the like) can easily evaluate detail of the estimation.

The word region refers to a group of parts which are related to one part of the vehicle and are in unity to some extent. Unity to some extent means that the parts in the group may be adjacent to the one part or may be involved in repair of the one part (for example, the parts included in the group are necessary to be detached in repairing the one part) . The one part may constitute one region.

### BRIEF DESCRIPTION OF THE DRAWINGS

Fig. 1 is a block diagram showing a system structure according to an embodiment of the present invention.
Fig. 2 is a layout diagram of a screen for specifying a data input direction of a vehicle to be repaired, the screen being displayed on a display, in the embodiment.
Fig. 3 is a layout diagram of a screen for specifying a damaged position of the vehicle to be repaired, the screen being displayed on the display, in the embodiment.
Fig. 4 is a layout diagram of a screen for specifying a damaged position of the vehicle to be repaired, the screen being displayed on the display, in the embodiment.
Fig. 5 is a screen layout diagram showing a state in which a damaged region is displayed on the display in the embodiment.
Fig. 6 is a screen layout diagram showing a state in which mark data is displayed on the display in the embodiment.
Fig. 7 is a screen layout diagram showing a state in which replacing repair is designated for a region displayed on the display in the embodiment.
Fig. 8 is a layout diagram of a screen showing a total of replacement costs of the vehicle to be repaired, the screen being displayed on the display, in the embodiment.
Fig. 9 is a diagram for explaining division lines set for a region in the embodiment.
Fig. 10 is a screen layout diagram showing a state in which the damaged region is displayed on the display in the embodiment.
Fig. 11 is a screen layout diagram showing a state in which damage detail of the region displayed on the display is specified in the embodiment.
Fig. 12 is a screen layout diagram showing a state in which the damage position is specified by the mark data in the region displayed on the display in the embodiment.
Fig. 13 is a screen layout diagram showing a state in which a damage shape is specified by the mark data in the region displayed on the display in the embodiment.
Fig. 14 is a screen layout diagram showing a state in which refit costs of the region displayed on the display are centered in the embodiment.
Fig. 15 is a screen layout diagram showing a state in which replacement costs of the region displayed on the display are centered in the embodiment.
Fig. 16 is a flowchart showing an operating principle of a vehicle repair cost estimating system in the embodiment.
Fig. 17 is a flowchart showing the operating principle of the vehicle repair cost estimating system in the embodiment.
Fig. 18 is a flowchart showing the operating principle of the vehicle repair cost estimating system in the embodiment.
Fig. 19 is a diagram for explaining division data of the vehicle repair cost estimating system in the embodiment.
Fig. 20 is a diagram for explaining division data of the vehicle repair cost estimating system in the embodiment.
Fig. 21 is a diagram for explaining division data of the vehicle repair cost estimating system in the embodiment.
Fig. 22 is a diagram for explaining division data of the vehicle repair cost estimating system in the embodiment.
Fig. 23 is a diagram for explaining division data of the vehicle repair cost estimating system in the embodiment.
Fig. 24 is a diagram for explaining division data of the vehicle repair cost estimating system in the embodiment.
Fig. 25 is a diagram showing a state in which a damage shape is specified by the mark data in the region displayed on the display in the embodiment.

### DETAILED DESCRIPTION OF THE PREFERRED EMBODIMENT

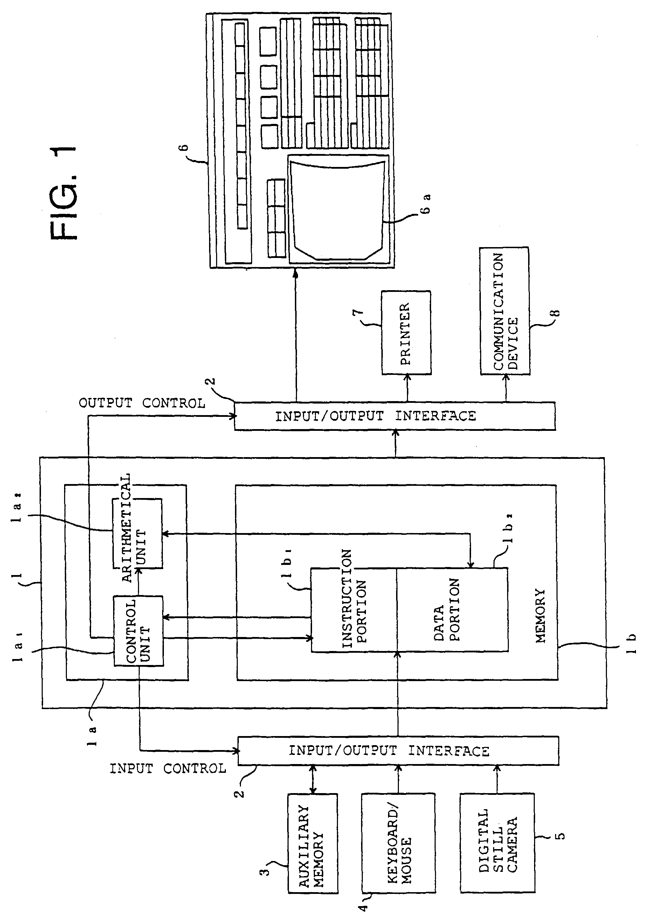

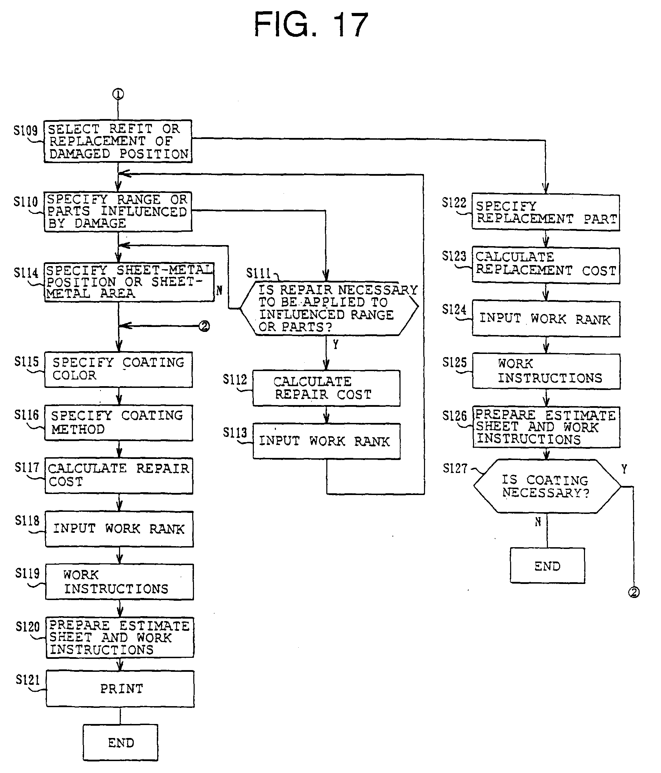

An embodiment of a vehicle repair cost estimating system of the present invention will be specifically described below based on Figs. 1 to 25.

As shown in Fig. 1, the vehicle repair cost estimating system according to the present embodiment comprises a personal computer 1 (hereafter referred to as PC), an auxiliary memory 3 connected to the PC 1 through an input/output interface 2, an input device 4 comprising a keyboard, a mouse, a light pen, or the like, a digital still camera 5, and output devices such as a display 6, a printer 7, and a communication device 8 are connected to the PC 1 through the input/output interface 2.

The auxiliary memory 3 connected to the PC 1 through the input/output interface 2 can use a floppy disk, a photo-electromagnetic disk, a hard disk, an optical disc, or the like.

As the input device 4, an OCR (OPTICAL CHARACTER RECOGNITION), an OMR (OPTICAL MARK READER), a bar code reader, a digitizer, an image scanner, a voice recognition unit, or the like can be connected in addition to the keyboard and the like. As the output devices, a plotter, and a multimedia processor can be connected in addition to the display 6. The communication device 8 may also be connected to a terminal through a communications line.

As a device for capturing image data of a vehicle to be repaired, an optical sensor having a light illuminating section, a light-receiving optical section, and a photoelectric trasducing section or the like can be used in addition to the digital still camera 5. For the light illuminating section of the optical sensor, a tungsten lamp, a halogen lamp, a fluorescent lamp, or the like is used for a continuous illumination and a xenon lamp is used for an intermittent illumination. As a light-receiving optical system, an ITV camera using a vidicon, a silicon vidicon, a carnicon, or the like, a semiconductor sensor, or a MOS (METAL OXIDE SEMICONDUCTOR) or CCD (CHARGE COUPLED DEVICE) fixed camera is used. The photoelectric transducing section comprises a camera tube, an individual camera tube device, a photoelectric transducing element, or the like.

On the other hand, a laser light can be used as a light source for illuminating a damaged portion. Although it is not shown, if the laser light is used, He-Ne laser light or the like is caused to converge by a condenser lens such that the He-Ne laser light or the like has a necessary spot diameter at the damaged position, an electromagnetic vibrating mirror scans with the light in a width direction of the damaged position, and a surface of the damaged position is illuminated by a reflecting mirror. Reflected diffracted light from the damaged position at this time is condensed by a condensing system comprising an optical fiber and the like and converted into an electric signal by a photomultiplier tube.

The PC 1 comprises a main memory 1b (a hard disk, ROM, RAM [hereafter referred to as memory]) and a central processing unit 1a (hereafter referred to as "CPU"). The PC 1 which provides repair instructions of the vehicle to be repaired starts a program cached in the memory 1b or the auxiliary memory 3 under control of an OS and carries out a predetermined task (process). The PC 1 can also carry out multiple tasks, which means to carry out a plurality of tasks theoretically, at the same time, and in parallel.

A part of a function of the PC 1 includes a function of a memory management unit. In other words, the memory management unit has a function of translating a logical address on the memory 1b designated by the process into a physical address designating an address of a logical page in the memory 1b where reading and writing are actually carried out in order to carry out reading or writing.

The CPU which constitutes the PC 1 main unit has an arithmetical unit 1a₂ for performing numerical computations (four operations), a logical operation, and the like on given data and a control unit 1a₁ for fetching an instruction from the memory 1b into the CPU based on an executed address of instruction portion 1b₁, decoding the instruction, and issuing a necessary action directive to other units.

The control unit 1a₁ issues an input control command to the input device 4 and the like, a memory 1b control command to the memory 1b, and an output control command to the output device and the like, as shown in Fig. 1.

A command input from the input device 4 and the like is first transferred to the memory 1b. In the memory 1b, data and an instruction are selected based on the given command, and the selected data and the instruction are transferred to the control unit 1a₁ of the CPU.

Image data captured by the digital still camera 5 and transferred to the memory 1b through the input/output interface 2 or data of the vehicle to be repaired inputted from the input device 4 such as the keyboard is stored in a data portion 1b₂ of the memory 1b.

The PC 1 corresponds to a calculating device, and specifying means, determining means, estimating means, and dividing means are included in the PC 1.

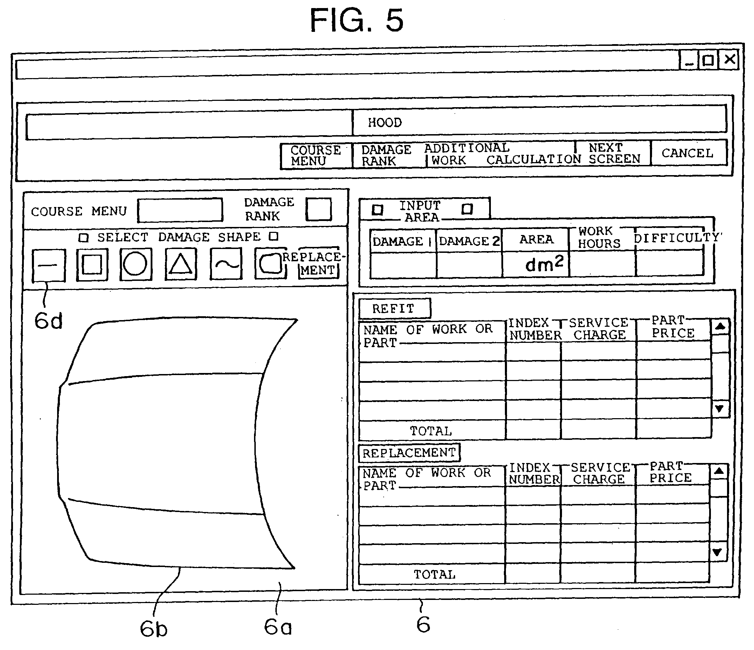

The data portion 1b₂ stores a mark data 6c corresponding to kinds of damage. The mark data 6c indicates, as shown in Fig. 5, for example, a substantially straight scratch and the like by a straight line, a substantially angular dent or warp by a square, a round dent or warp by a circle, a stab and the like caused by a bouncing pebble or a sharp-edged thing by a triangle, corrugation or warp on an exterior surface by a curved line, and other damage which cannot be described by an arbitrary shape.

The data portion 1b₂ stores vehicle specification data, part data, coating color data, and coating method data which correspond to a grade of each vehicle type.

The data portion 1b₂ also stores data groups of part prices and wages required for part replacement or repair and corresponding data of the damaged regions of the vehicle to be repaired and the parts to be replaced or repaired due to the damage as vehicle attribute data. The data portion 1b₂ further stores wage data corresponding to each work and required for sheet-metal repair.

It is possible to rank the data stored in the data portion 1b₂. For example, in replacement parts, new genuine parts (parts designated by automakers) are ranked in a top rank, new excellent parts (parts which can replace the genuine parts) are ranked in an upper-middle rank, used genuine parts are ranked in a lower-middle rank, and used excellent parts are ranked in the lowest rank when they are stored.

In this manner, it is possible to offer a choice of replacement parts in the estimation and to disclose information to a user so as to let the use to choose. It is also possible to increase use of a used-part network and the like and to propose promotion of recycling.

The data stored in the data portion 1b₂ includes historical data of the vehicle to be repaired. In other words, as the historical data of the vehicle to be repaired, there are data of damage in the past of the vehicle to be repaired and data of repair (maintenance) in the past of the vehicle to be repaired. The damage data includes data such as a damaged portion (damaged region), a repair method for the damage (replacement of a part or refit of the part), data of a used part, a time of repair (year, month, and date), a repair price, image data of the damaged position, and the like. As the maintenance data, data such as data of a replaced part, data of degradation of the part (data of a fact that a certain part is necessary to be replaced after 10000 km of driving of the vehicle), and the like is included.

The historical data is stored as vehicle attribute data in the data portion 1b₂ and can be retrieved based on an individual number such as a vehicle number, a client number, and the like. It is also possible to retrieve and refer to the historical data of a vehicle of the same type as the vehicle to be repaired as auxiliary data in a case of estimating a repair cost of the same type of vehicle.

The control unit 1a₁ decodes data of the vehicle to be repaired and image data of the vehicle to be repaired and an instruction which have been transferred from the memory 1b and issues a necessary action directive to the arithmetical unit 1a₂. The arithmetical unit 1a₂ performs an operation such as a logical operation on given data of the vehicle to be repaired, image data, and instruction.

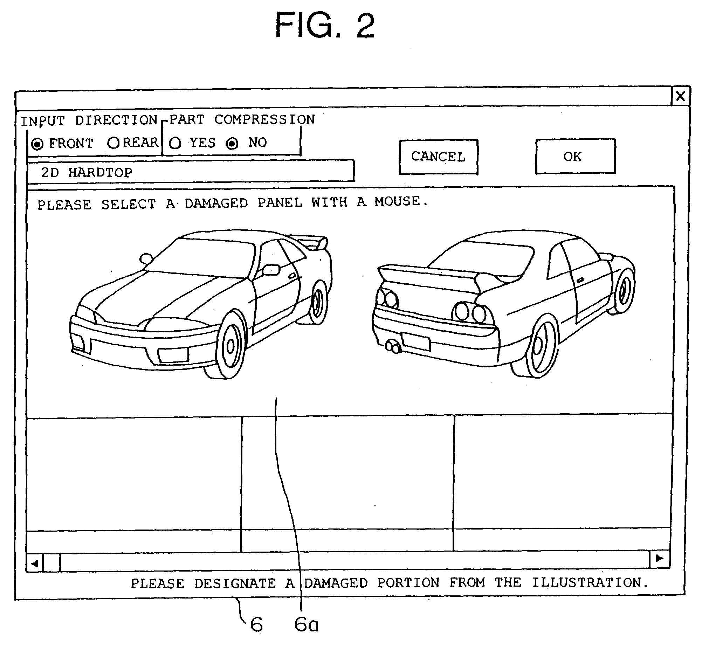

In other words, by the instruction read from the memory 1b and decoded by the control unit 1a₁, the input data of the vehicle to be repaired and the like are stored in the data portion 1b₂, and from the data of the vehicle to be repaired and the like the vehicle attribute data corresponding to the data of the vehicle to be repaired is retrieved first. Then, as shown in Fig. 2, a graphics 6a screen is displayed on the display 6 from the vehicle attribute data.

The graphics 6a displayed on the display 6 may be two-dimensional flat plane graphics 6a or three-dimensional graphics 6a. It is also possible to display image data of the vehicle to be repaired on the display 6 at the same time, the image data being captured by the digital still camera 5 or the like.

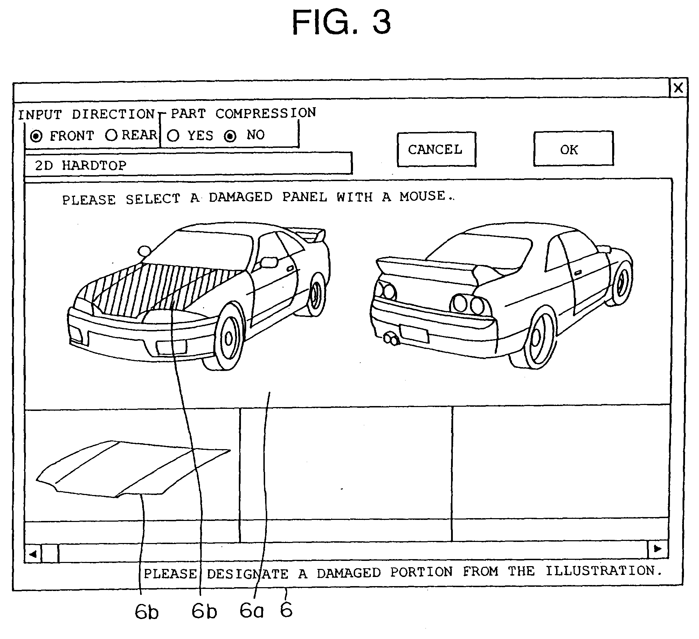

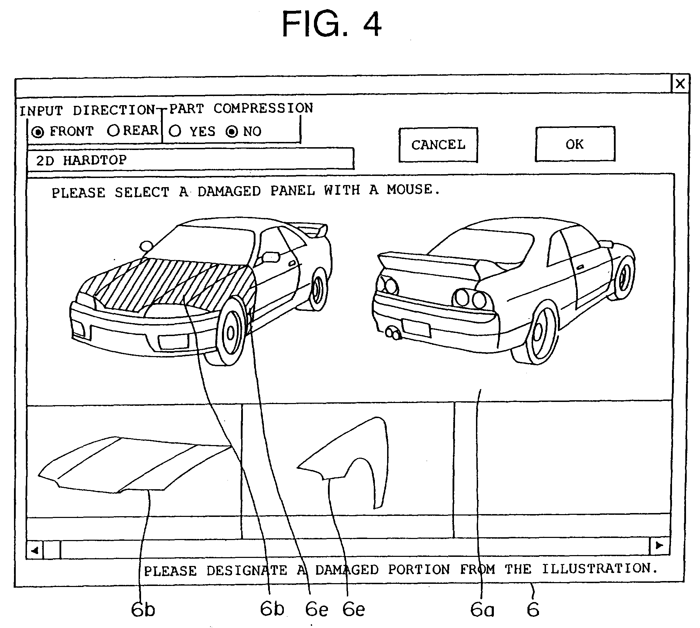

When the graphics 6a screen is displayed on the display 6, the next instruction is read into the control unit 1a₁ from the memory 1b and the instruction is provided by the control unit 1a₁ to the arithmetical unit 1a₂. Then, when the mouse is clicked on a hood 6b of the vehicle to be repaired, for example, it is specified that the damaged portion is the hood 6b and the hood 6b is colored and displayed on the display in order to make a distinction between the damaged portion and the other portions (Fig. 3). If the mouse is clicked on a left fender 6e of the vehicle to be repaired, it is specified that the damaged portion is the left fender 6e and the left fender 6e is colored and displayed on the display (Fig. 4). Then, these data are fed back to and stored in the data portion 1b₂.

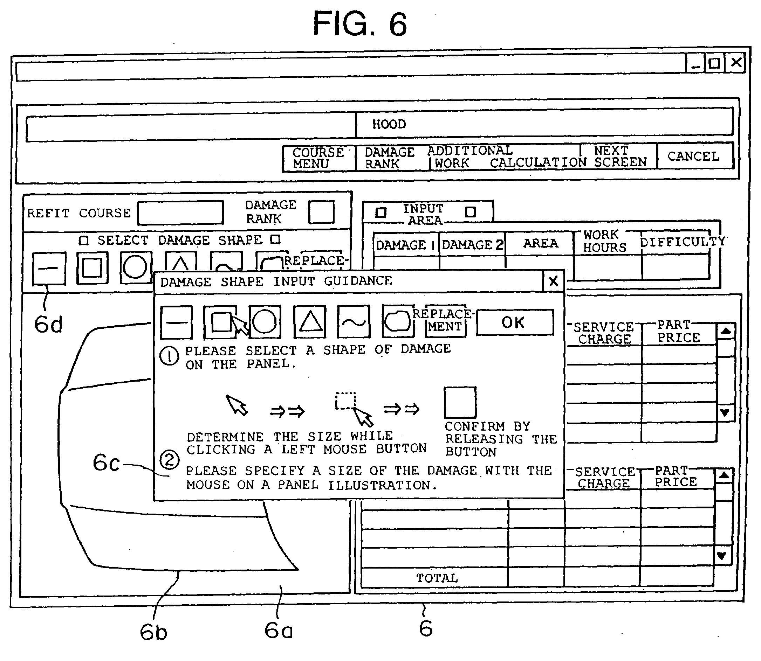

If the damaged portion is determined in this manner, the next instruction is read from the memory 1b into the control unit 1a₁ and the control unit 1a₁ issues a directive to the arithmetical unit 1a₂ for displaying the hood 6b on the display 6 as shown in Fig. 5. Furthermore, the mark data 6c stored in advance and an operator guidance of the mark data 6c are displayed on the display 6 at the same time (Fig. 6).

The operator guidance can be cleared from the display by pressing a predetermined key. Means for displaying and not displaying the operator guide at the appropriate time is mounted.

Next, a mark 6d corresponding to the kind of damage is selected from the mark data 6c. Because it is clear that the hood 6b is damaged to such an extent that the hood 6b should be replaced here, the mark 6d of "replacement" is selected.

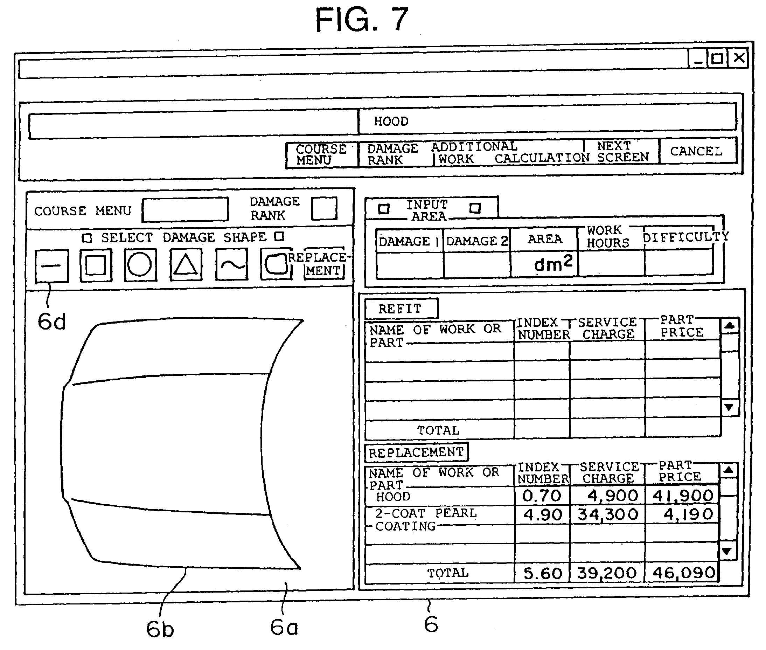

Then, work and parts required for replacement of the hood 6b are displayed on the display 6 (Fig. 7).

When processing as to the hood 6b is completed, the system goes to processing as to the left front fender 6e.

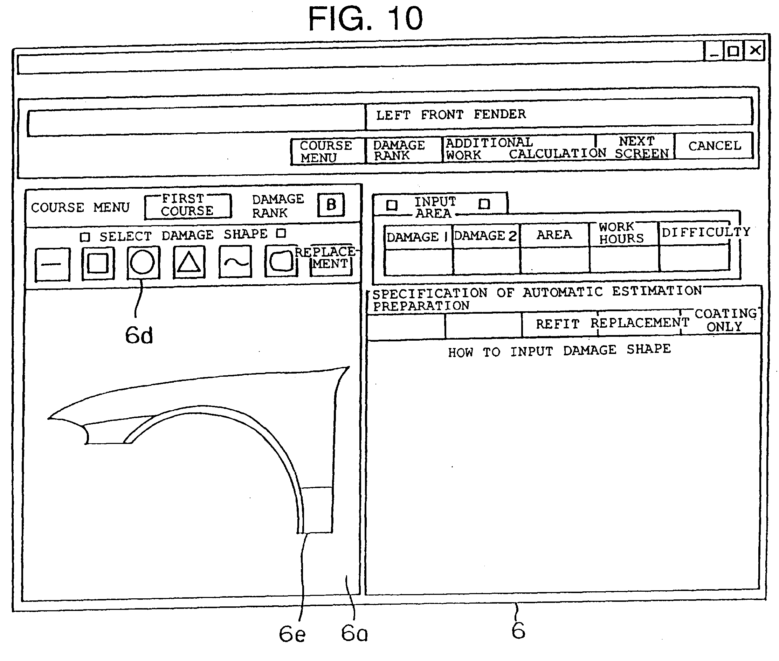

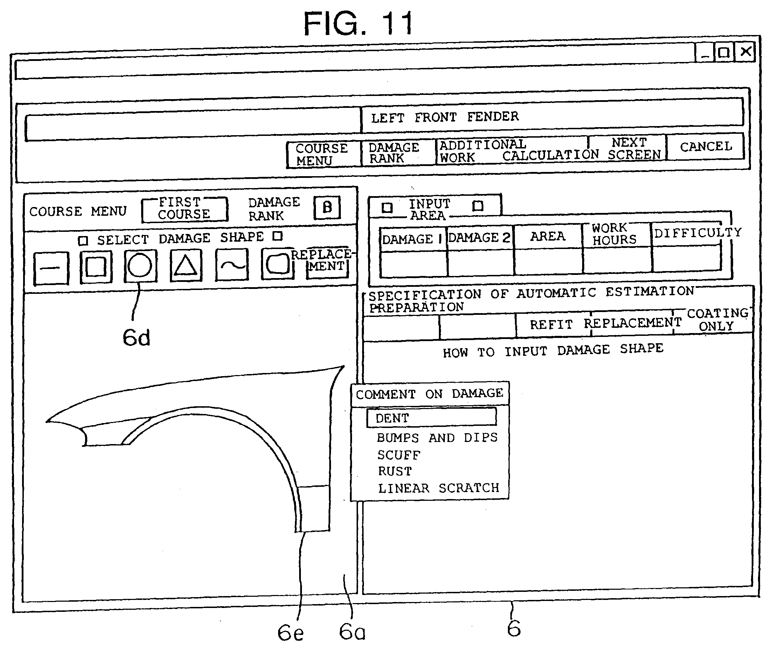

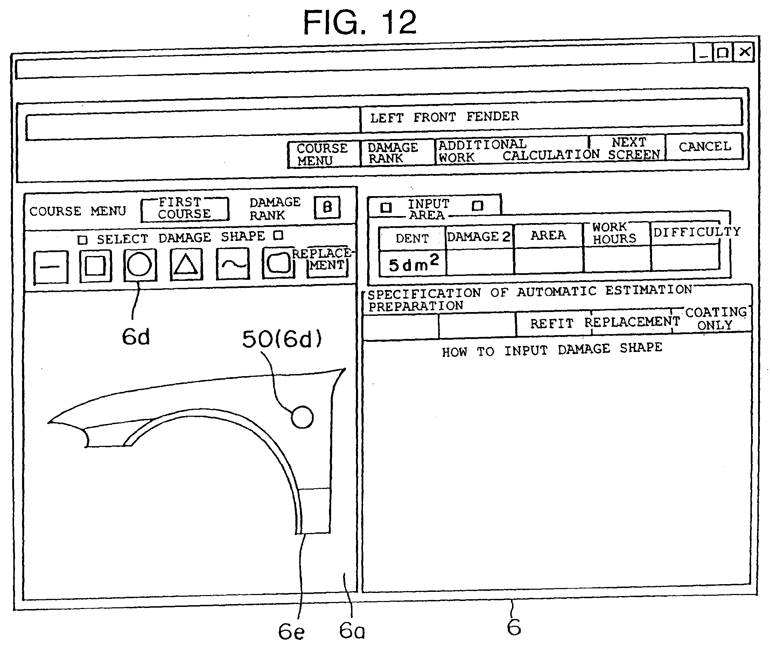

In other words, when the front fender 6e is displayed on the display 6 (Fig. 10), detail of damage (here "dent") is specified and the mark 6d corresponding to the kind of the damage is selected from the mark data 6c (Fig. 11), and the mark 6d is dragged and dropped to be displayed on the displayed graphics screen of the front fender 6e (Fig. 12).

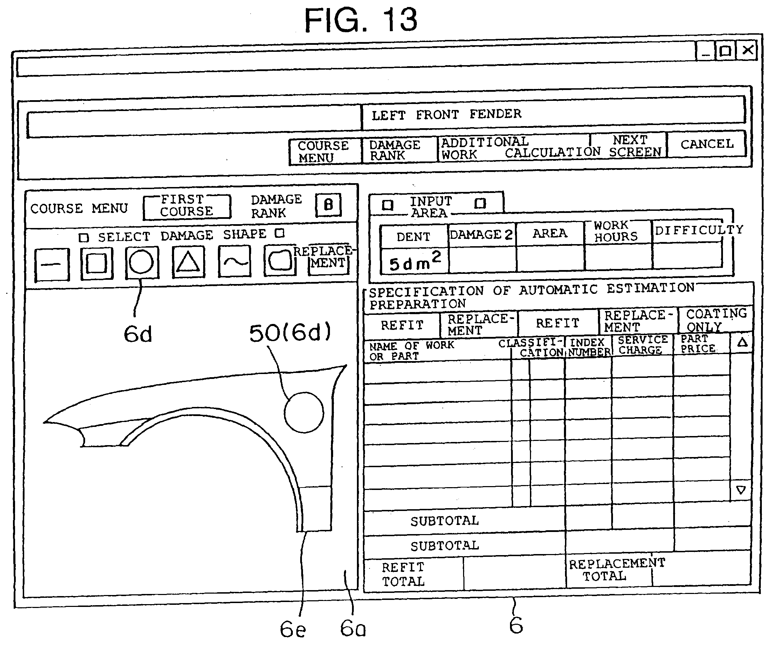

Next, a size of the mark 6d is changed according to an area of the damage (Fig. 13). If the damage is a substantially straight scratch and the straight mark 6d is selected from the mark data 6c, for example, a size of the mark 6d is changed by dragging and dropping the mark 6d to display the mark on the damaged position, dragging the mark 6d to the right while clicking a left mouse button, enlarging the mark 6d to the size of the damage, and canceling the clicking, thereby specifying the size of the scratch by a length of the mark 6d.

If the damage is a substantially angular dent, warp, or the like and the square mark 6d is selected from the mark data 6c, the mark 6c is dragged and dropped to be displayed at the damaged position on the graphics 6a, the mark 6d is dragged rightward and diagonally downward while clicking the left mouse button, the mark 6d is enlarged to the size of the damage, and the clicking is canceled, thereby specifying the size of the angular dent or warp by a range of the mark 6d.

In this manner, the kind (shape), position, and range of the damage are specified in the arithmetical unit 1a₂ and these data are stored in the data portion 1b₂ as data of the vehicle to be repaired.

An analysis of the area of the damage is made by calculating an area of the mark 6d designated and displayed on the graphics screen. For example, if the displayed mark 6d is the square, the area is obtained by a length × a width. If the mark 6d is the circle, the area is obtained by the ratio of the circumference of a circle to its diameter × the square of a radius (πr²). In the case of the triangle, the area is obtained by (a base × a height)/2. The area of the arbitrary shape is obtained by the circular constant (π) × a major axis × a minor axis, as an area of an ellipse.

In this case, an area corresponding to a scale of the front fender or the like of the vehicle to be repaired is stored in advance and the area of the damage is calculated by calculating what percentage of the total area of the front fender the mark 6d displayed on the front fender 6e occupies.

In addition to the above calculating method, the area may be calculated by calculating a number of dots of the graphics screen. For example, if the mark 6d is the circle, the number of dots in the circle are counted and the area of the damage can be obtained by multiplying the obtained number of dots by an actual area corresponding to a dot. It is also possible to store a number of dots of the front fender 6e and an actual area of the front fender 6e in the memory in advance, calculate what percentage of the number of dots of the front fender 6e the number of dots in the designated circle occupies, and multiply the area of the front fender 6e by the percentage to obtain the damaged area.

The instruction stored in the memory 1b, read into the control unit 1a₁, and provided to the arithmetical unit 1a₂ includes to select replacement or refit of the damaged position based on the designated mark 6d or to specify a range or parts influenced by the damage of the damaged position, as described above. The instruction further includes to specify a sheet-metal position and a sheet-metal area based on the kind and range of the damage of the damaged position.

If replacement or refit of the damaged position is selected, it is possible to select whether coating is required or not in association with replacement.

It is also possible to automatically recognize and specify a coating color, a coating range, a coating method of the damaged position when the coating is to be carried out.

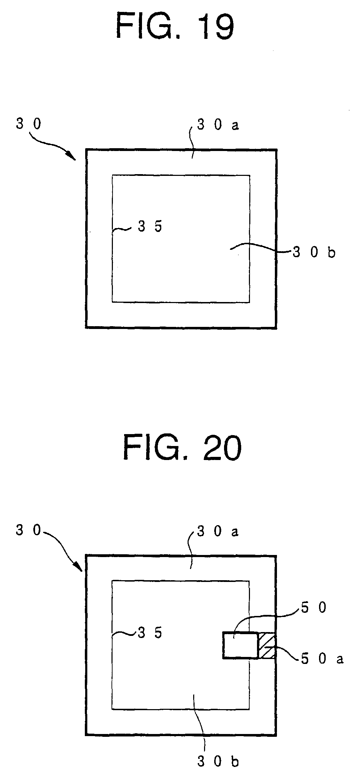

Based on Figs. 19 to 24, a concept of dividing each shell panel (each region) into respective areas according to a predetermined condition and repair conditions of the respective areas will be described by taking coating as an example.

In a first dividing processing, as shown in Fig. 19, if the shell panel 30 of the vehicle is assumed, the division line (imaginary line) 35 is set inwardly from the end portion of the shell panel 30 for a predetermined distance (for example, 10 cm). An outside area defined by the division line 35 is defined as an outer area 30a and an inside area defined by the division line 35 is defined as an inner area 30b. In this case, if a damaged portion 50 is in the outer area 30a, an area extending from the damaged portion 50 to the nearest end portion of the shell panel 30 is set as a coating range (50, 50a) (Fig. 20).

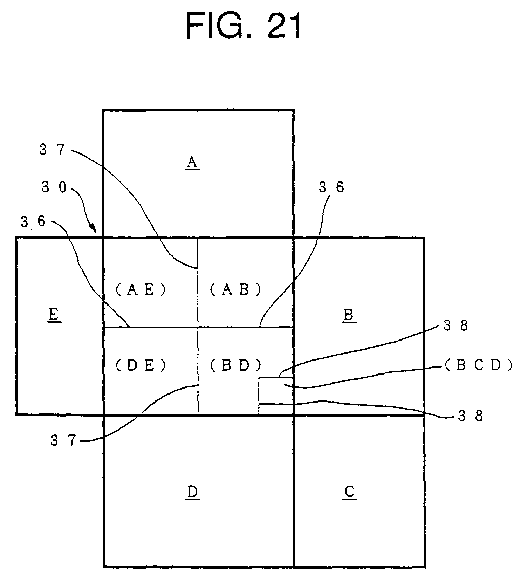

In a second dividing processing, as shown in Fig. 21, it is assumed that shell panels A, B, C, D, and E are respectively in adjacent to a periphery of the shell panel 30 of the vehicle. A division line 36 which corresponds to the panels A and D and is a horizontal line in Fig. 21 and a division line 37 which corresponds to the panels B and E and is a vertical line in Fig. 21 are set on the shell panel 30. A division line 38 corresponding to the panel C is also set on the shell panel 30.

In the shell panel 30 divided into four by the division lines 36 and 37, an upper right area (AB) in Fig. 21 is an adjacent area of the panels A and B when attention is given to the area (AB). A lower right area (BD) is an adjacent area of the panels B and D when attention is given to the area (BD). When a lower left area (DE) is an adjacent area of the panels D and E when attention is given to the area (DE). An upper left area (AE) is an adjacent area of the panels A and E when attention is given to the area (AE).

An area (BCD) which is in a lower right corner of the shell panel 30 and is defined by the division line 38 is an adjacent area of the panels B, C, and D.

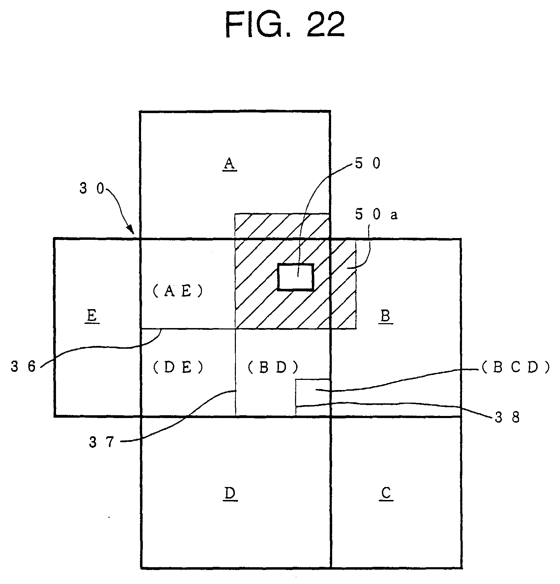

When the damaged area is located in any of the adjacent areas, a predetermined range (10 cm from the adjacent area, for example) of the panel corresponding to the adjacent area is set as the coating area. For example, as shown in Fig. 22, if the damaged portion 50 is at a position near a center of the AB area, the entire AB area and predetermined ranges of the panels A and B adjacent to the AB area are set as the coating range.

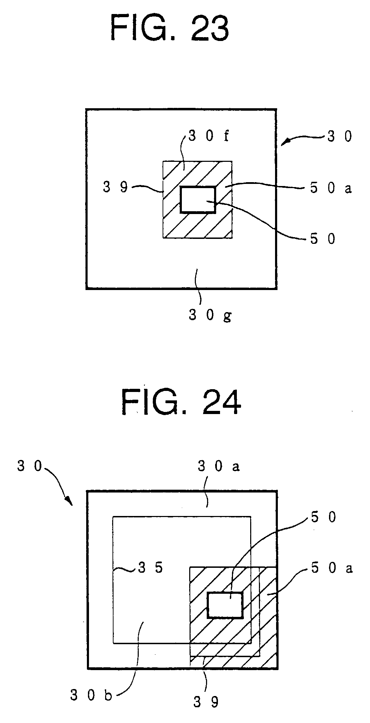

In a third dividing processing, if the damage 50 is assumed to be designated on the shell panel 30, a division line 39 is set at a predetermined range (at 10 cm outwardly from the end of the damage) from the periphery of the damage 50 as shown in Fig. 23. An area surrounded by the division line 39 is recognized as a near area 30f and the near area 30f is set as a coating range. An area of the shell panel 30 outside the near area 30f is set as a far area 30g.

In this manner, the PC 1 determines the coating range based on the division data and in the light of a predetermined condition of each area.

If the damaged portion lies across division lines of a plurality of areas, the coating range may be determined by overlapping the conditions of the respective areas with each other. It is also possible to determine the coating range by overlapping the above first to third dividing processings. As described above, the respective areas in the respective regions may be set in the data portion 1b₂ in advance (which is suitable to the first dividing processing and the second dividing processing), or the respective areas may be determined according to the operation result (which is suitable to the third dividing processing). The coating range is determined considering that to which range around the damaged portion, for example, "gradation coating" should be applied to carry out the most rational repair work, and, as a result, an economical repair work can be obtained. For example, if the damaged portion is near the end of the shell panel, the work can be carried out more easily by coating the end of the shell panel including the damaged position at a time than by coating only the damaged portion.

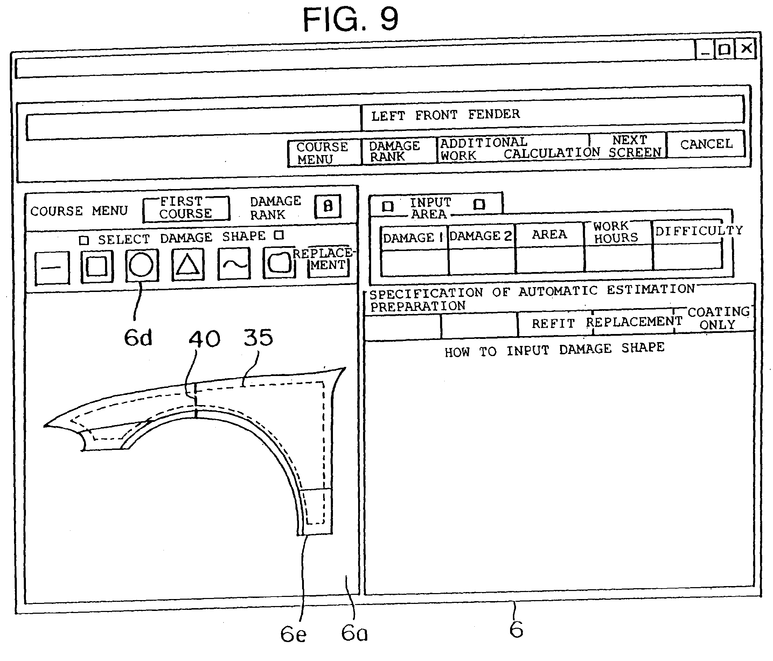

Fig. 9 shows an example in which division lines set on the left front fender 6e are specifically displayed. A division line 40 is a line for dividing the left front fender 6e into two, namely, left and right. When a damaged portion is on the right side of the left front fender 6e, a condition that an entire right half area defined by the division line 40 is set as a coating range, is set as division data. When the damaged portion is on the left side of the left front fender 6e, a condition that an entire left half area defined by the division line 40 is set as the coating area, is set as the division data.

Because the damaged portion 50 on the left front fender 6e is in contact with a division line 35 set on the left front fender 6e (the damaged portion reaches an outer area), the repair work may influence a portion adjacent to the left front fender 6e.

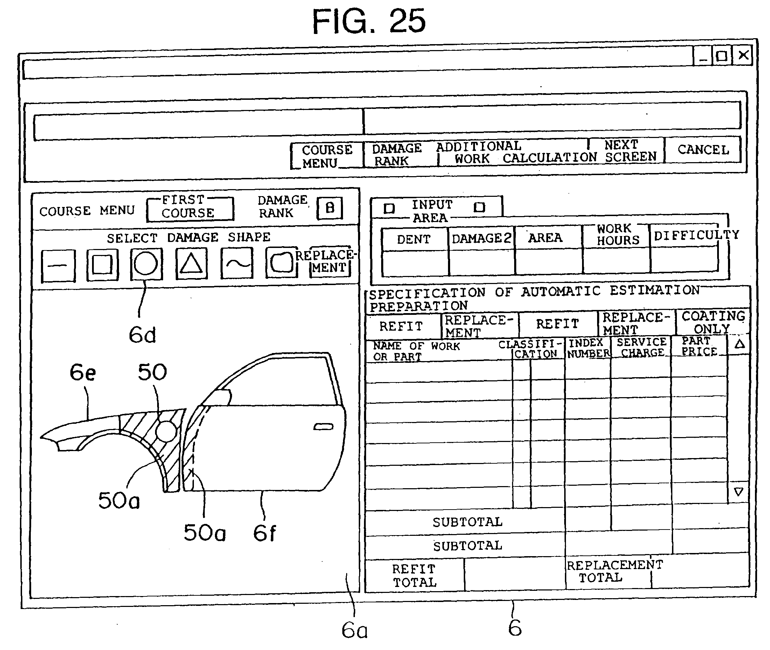

Therefore, as shown in Fig. 25, a left door panel 6f which is a shell panel adjacent to the left front fender 6e is displayed on the screen with the left front fender 6e at the time when a position of the damaged portion 50 is confirmed.

As a coating range in association with repair of the damaged portion 50, the coating range (50, 50a) is designated. The adjacent shell panel (left door panel 6f) may be displayed in a plane on a screen together with the damaged panel (left front fender 6e) in a state in which the vehicle is developed as shown in Fig. 25. It is also possible to display the adjacent shell panel (left door panel 6f) together with the damaged panel (left front fender 6e) in a three-dimensional appearance.

Next, repair of the damaged portion by replacing a part (region) will be described.

First, replacement (icon) on the screen is selected to determine a wage and cost of the part and to display costs required for replacement on the display 6 as shown in Fig. 7. Here, a cost when repair is carried out can be also displayed at the same time with the cost of replacement. Moreover, it is possible to specify the kind of a replacing new part, namely, a new genuine part or a used genuine part should be used.

In selecting replacement or repair of the part, it can be determined by reference to historical data of the vehicle to be repaired. In other words, if it was found that the part would require replacement soon due to secular deterioration when damage data or maintenance data in the past of the damaged region is called, replacement is selected even if refit can be carried out at a lower cost.

The historical data may be used as a part of the repair condition data. For example, if a region (part) to which the damaged portion belongs needs replacement within a year or before 10000 km of driving, a comment that selecting "replacement" is suitable is preferably displayed on the screen. In this case, the historical data is reflected as the repair condition data not only directly for the damaged region (the left front fender 6e in Fig. 25) but also for an adjacent region which is assumed to be influenced by the damage (the left door panel 6f in Fig. 25). For example, if progressing of deterioration of a door check of the left door panel 6f (adjacent region) which is assumed to be influenced by the damage has been recorded in the historical data, instructions for urging replacement of the door check are displayed on the display 6.

The "influence of the damage" from the direct damaged region on the adjacent region includes repair work such as gradation coating required at the adjacent region in association with repair work of the direct damaged region, repair work required as a result of damage caused by a ripple effect of impact transmitted from the direct damaged region to the adjacent region, and the like.

It is also possible to select replacement or refit of the part by reference to historical data of a vehicle of the same type as the vehicle to be repaired. In other words, it is possible to display on the display 6 recommended work (replacement or refit) determined by an average value (an average of repair work of the region and the adjacent region according to actual repair results) of data of a plurality of vehicles of the same type having the same damaged region as the vehicle to be repaired.

Furthermore, the historical data of the same type of vehicle can be used a part of the repair condition data. In other words, the repair conditions (repair conditions based on the above first to third dividing processings ) of the division data set in advance are corrected by using the average value of the data of the same type of vehicle. For example, if an operation result indicating that gradation coating in a width of 10 cm is necessary to be applied to the end of the adjacent region (the left door panel 6f) in association with repair of the direct damaged region (the left front fender 6e) is obtained, and if the average value of the historical data is graduation coating in a width of 20 cm, a correction is made as follows. In other words, the operation result and the average value of the historical data are summed up in proportions of 70 % to 30 % (10 cm × 0.7 + 20 cm × 0.3 = 13 cm) and a width of the gradation coating of the adjacent region (left door panel 6f) is determined at 13 cm as a final operation result.

This is because wider gradation coating of the adjacent region may be necessary depending on a special design of the vehicle since some types of vehicles have designs significantly different from those of the other types of vehicles.

When the historical data is used as a part of the repair condition data, it is possible to increase a proportion of a correction to an operation result by a predetermined repair condition data as the number of data of the historical data increases (as reliability of the data increases).

Moreover, by entering in advance a plurality of courses of refit and replacement assumed in a capacity of repair experts by adopting a wish of the user, and by selecting a suitable course, a cost can be calculated according to a content of the course.

For example, it is possible to set an economy course for estimating while adopting the user's wish that expensive refit or the like should not be carried out because a price of the vehicle is low. It is also possible to arbitrarily set super courses and the like while adopting the user's wish for refit, replacement, or the like to bring the vehicle into just like a new vehicle or the user's whish for prudential repair because the vehicle is a high-class car. In the present system, by selecting any of the set respective courses, an estimation according to the selected course can be made.

Although the courses are set according to detail of refit and repair in the above respective examples, courses may be set according to costs. For example, courses may be set according to costs while adopting the user's wish for repair at a total cost of ¥ 200,000 or less, the user's wish for repair at any cost, and the like, or courses may be set according to options including an option to hire or not hire a vehicle during refit or replacement work of the user's vehicle, or an option of predetermined maintenance or an inspection of the vehicle in addition to refit and replacement work. In this manner, the courses according to various service systems which can be offered to the user of the vehicle can be set and used as a system for addressing more specific needs on a part of the staff of the repair shop who uses the vehicle repair directing system according to the present embodiment.

When the above specification or the like is completed, all the costs required for the replacement are added up and displayed on the display 6. For example, in a case of replacement of the hood, if a labor rate which is a work wage per unit time is set at ¥ 7,000, the labor rate is multiplied by an index number, 0.70, which corresponds to a degree of difficulty of the work, to obtain a service charge of ¥ 4,900. A price of the hood is 41,900 as a price of a replacement part, and the sum of the service charge and the price of the hood is ¥ 46,800.

Next, in coating, if a labor rate is set at ¥ 7,000, the labor rate is multiplied by an index number, 4.90; to obtain a service charge of ¥ 34,300. A cost of coating is ¥ 4,190 and the sum of the service charge and the cost of the coating is ¥ 38,490. Therefore, a total cost of replacement is ¥ 85,290 which is obtained by adding ¥ 38,490 to ¥46,800.

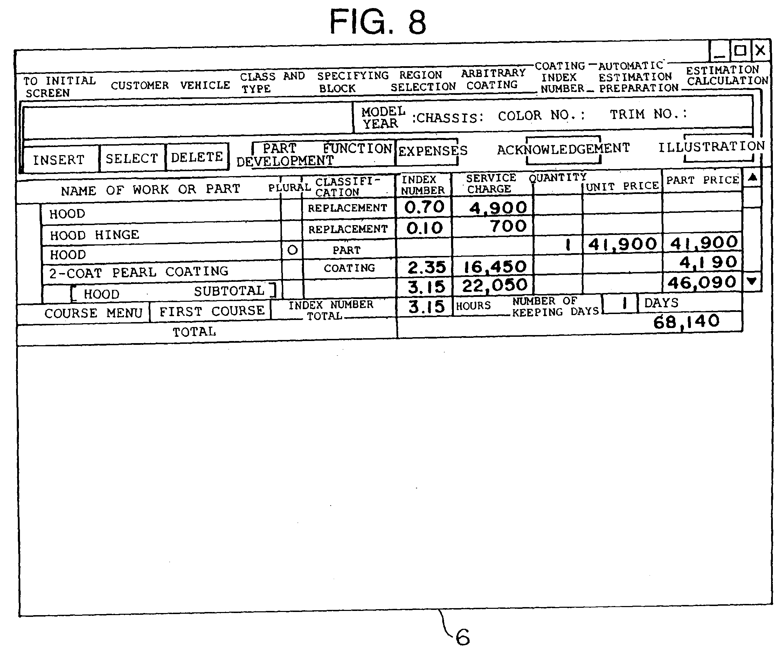

If the repair is limited to only the hood 6b, a total cost of the repair of the hood 6b, a repair course, work hours, and the number of keeping days are displayed on the display as shown in Fig. 8.

In the embodiment, as a cost of repair of the hood 6b, a labor rate is set at ¥ 7,000 which is multiplied by an index number of 3.15, to obtain a service charge of 22,050. A price of the hood 6b is ¥ 41,900 and a total of the service charge and the price of the part is ¥ 68,140.

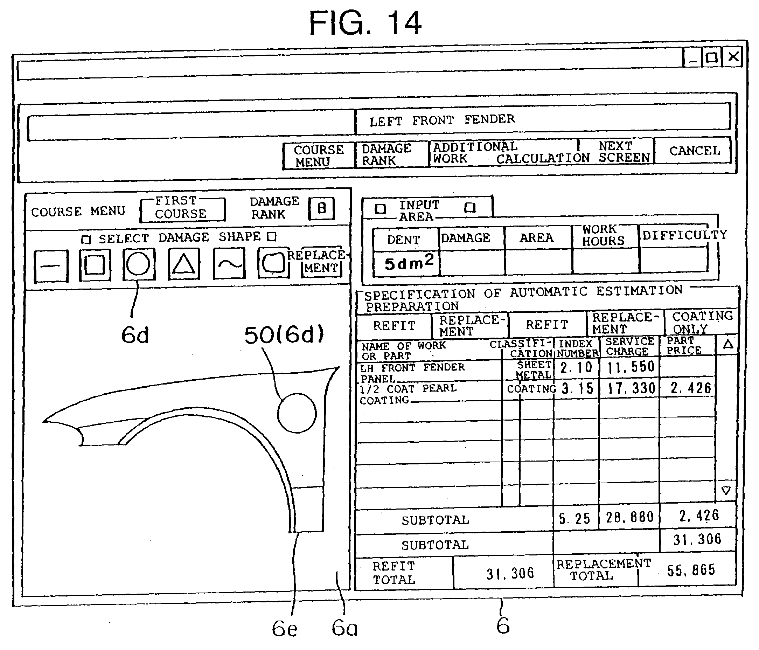

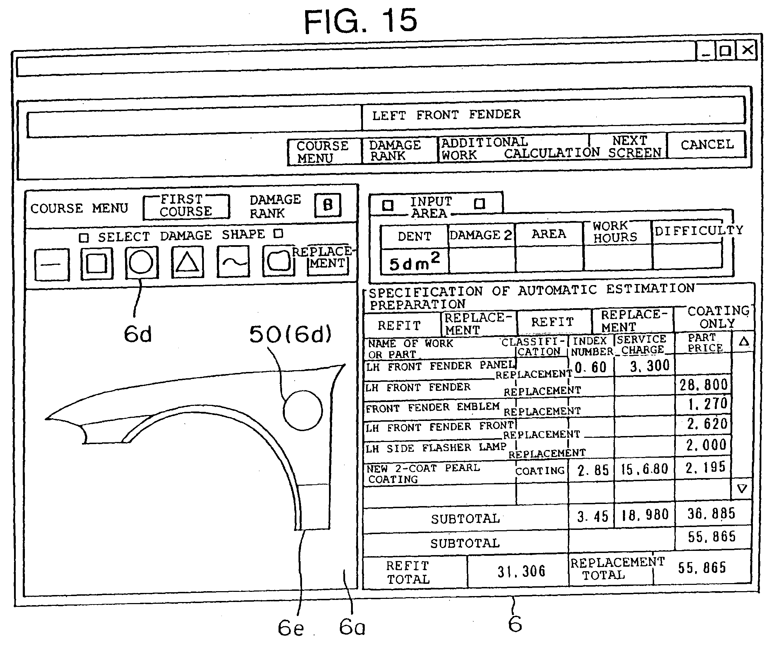

On the other hand, with regard to the front fender 6e for which refit of the part is selected, a repair cost is calculated similarly to the hood and a cost of refit is displayed as shown in Fig. 14. It is also possible to display a cost of repair by replacing the front fender 6e in detail as shown in Fig. 15.

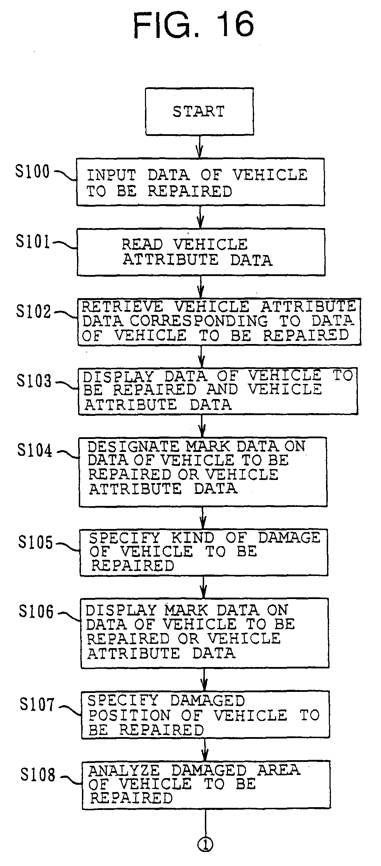

Next, an operating principle of the calculating device used for the vehicle repair directing system according to the embodiment will be described based on flowcharts of Figs. 16 to 18.

First, data of vehicle to be repaired such as a vehicle number which specifies a vehicle type of the vehicle to be repaired is inputted by the input device 4 and transferred to the PC 1 through input/output interface (step 100).

Next, the control unit 1a₁ of the PC 1 provides an instruction to read the data of the vehicle to be repaired and the vehicle attribute data stored in the memory to the arithmetical unit 1a₂ (step 101) and the arithmetical unit 1a₂ retrieves the data of the vehicle to be repaired for the vehicle attribute data corresponding to the data of the vehicle to be repaired and read the vehicle attribute data into a register (step 102) based on the instruction.

Then, both of the vehicle attribute data and the data of the vehicle to be repaired which have been retrieved or one of them is displayed on the display 6 (step 103). In the embodiment, an image displayed on the display 6 is illustration graphics 6a of a sedan, a hardtop-type vehicle, or the like.

It is also possible to display an entire picture of a specific type of vehicle as illustration graphics 6a. Here, damaged regions are selected from the entire picture of the vehicle displayed on the display 6 and the respective selected regions are enlarged and displayed on the screen. On the display screen, the mark 6d data corresponding to kinds of damage is displayed at the same time.

Next, when the mark 6d data is selected according to a kind of the damage (step 104), the control unit 1a₁ provides an instruction to identify the damage indicated by the selected mark 6d data to the arithmetical unit 1a₂, and the arithmetical unit 1a₂ identifies the kind (shape) of the damage of the vehicle to be repaired based on the instruction (step 105).

Then, the mark 6d is dragged and dropped by using the mouse to be displayed on the damaged portion on the graphics 6a screen and a size of the mark 6d is changed according to a size of the damage (step 106).

Thus, the control unit 1a₁ identifies the position on which the mark 6d has been dropped as the damaged position and provides an instruction to calculate an area of the damaged portion according to the size of the dropped mark 6d to the arithmetical unit 1a₂. The arithmetical unit 1a₂ specifies the position (step 107) and the area (step 108) of the damage according to the instruction. The specified kind, position, and area of the damage are fed back to and stored in the memory 1b by the arithmetical unit 1a₂.

At the same time, the arithmetical unit 1a₂ respectively calculates costs of refit and replacement of the damaged position and the control unit 1a₁ causes the arithmetical unit 1a₂ to display the cost of the refit or replacement of the damaged position on the display 6.

Next, the arithmetical unit 1a₂ has an operator select refit or replacement of the damaged position (step 109).

Furthermore, when the refit is selected, the arithmetical unit 1a₂ specifies a range or a part or parts influenced by impact of damage (step 110). The influenced range and part(s) are specified based on repair work data and pertinent part data stored in advance in the memory.

It is also possible to retrieve a range and a part or parts influenced by similar damage by using historical data of a vehicle of the same type as the vehicle to be repaired so as to specify the influenced range or part (s) based on a retrieved result.

If there are any influenced ranges or parts, the influenced range or the part is specified, and the control unit 1a₁ provides an instruction to judge whether repair is necessary to be applied to the range or the part to the arithmetical unit 1a₂ and the arithmetical unit 1a₂ waits for an input by the operator and judges if repair is to be carried out (step 111). Here, if the operator judges that repair is necessary to be applied to the range or the part and inputs a command through the input device 4, the control unit 1a₁ causes the arithmetical unit 1a₂ to calculate a cost of the repair based on an initially set first course (step 112). Furthermore, if the operator inputs another work rank (step 113), the arithmetical unit 1a₂ feeds and stores the cost and the work rank back to and into the memory 1b.

The work rank is set based on the vehicle attribute data stored in advance in the memory 1b but may be changed every time the work rank is input through the input device 4.

Next, when specifying all the range or part(s) to be repaired are completed or when there is no influenced range or part, the control unit 1a₁ causes the arithmetical unit 1a₂ to specify a sheet-metal position and a sheet-metal area (step 114). Here, if sheet-metal is unnecessary, specifying the sheet-metal position and the sheet-metal area is not carried out.

When sheet-metal is necessary and the sheet-metal position and the sheet-metal area are specified, the arithmetical unit 1a₂ specifies a coating color (step 115) and a coating method (step 116). These specifying operation is carried out based on the vehicle attribute data stored in advance in the memory.

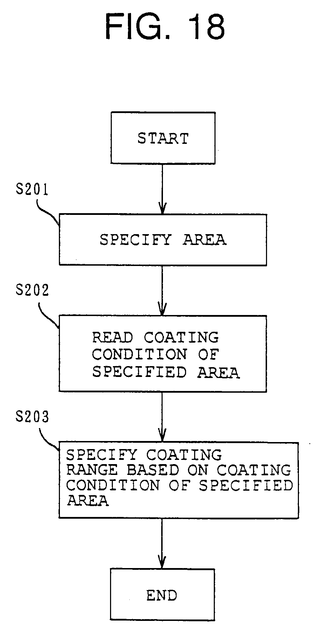

Then, in specifying the coating method in the step 116, a control flow shown in Fig. 18 is also carried out. In other words, the control unit 1a₁ specifies an area in the region (panel) of the damaged position (step 201), reads a coating condition of the specified area from the data portion 1b₂ (step 202), and specifies a coating range in the arithmetical unit 1a₂ according the read condition (step 203). In the step 203, the damaged region and another region, which is adjacent to the damaged region and for which repair work is necessary in association with the repair of the damaged region, are displayed on the screen at the same time.

After the specifying operation, the arithmetical unit 1a₂ feeds and stores results of the specifying operation back to and into the memory 1b.

Then, the control unit 1a₁ causes the arithmetical unit 1a₂ to calculate a cost of the repair based on the initially set first course (step 117). Further, when another work rank is input by the operator (step 118), the arithmetical unit 1a₂ feeds and stores the cost and the work rank back to and into the memory 1b.

Then, work instructions indicating a position to which repair is to be applied and the like are displayed (step 119) and an estimate sheet and work instructions are prepared (step 120). Then, the documents are output by printing them by the printer or the like (step 121).

If the replacement of the damaged position is selected in the step 109, the control unit 1a₁ provides an instruction to specify a replacement part to the arithmetical unit 1a₂. Based on the instruction, the arithmetical unit 1a₂ specifies the replacement part(step 122). Specifying the replacement part(s) is carried out based on the vehicle attribute data stored in advance in the memory.

Next, when specifying operation of the replacement part(s) is completed, the arithmetical unit 1a₂ calculates a cost of the replacement (step 123). When a work rank is input by the operator (step 124), the arithmetical unit 1a₂ feeds and stores the cost and the work rank back to and into the memory 1b.

Then, work instructions indicating a position to which the repair is applied and the like are displayed (step 125), and an estimate sheet and work instructions are prepared (step 126).

Next, judgement about the need for coating of the replacement part (s) is asked of the operator (step 127). Here, if the operator judges that the coating is unnecessary, the operation is completed at the time. If the operator judges that the coating is necessary, processings from the step 115 to step 121 are carried out.

With regard to the coating of each replacement part, an entire area of the replacement part may be designated as an area in the step 201 or a coating range may be specified based on a coating condition for coating the replacement part stored separately in the data portion 1b₂. The coating condition for the replacement part is, for example, to set vicinity of the peripheral end of the replacement part and adjacent vicinity of a part adjacent to the replacement part as the coating range.

The work hours and a degree of difficulty of work displayed on the display 6 are calculated by using the following index number table, for example.

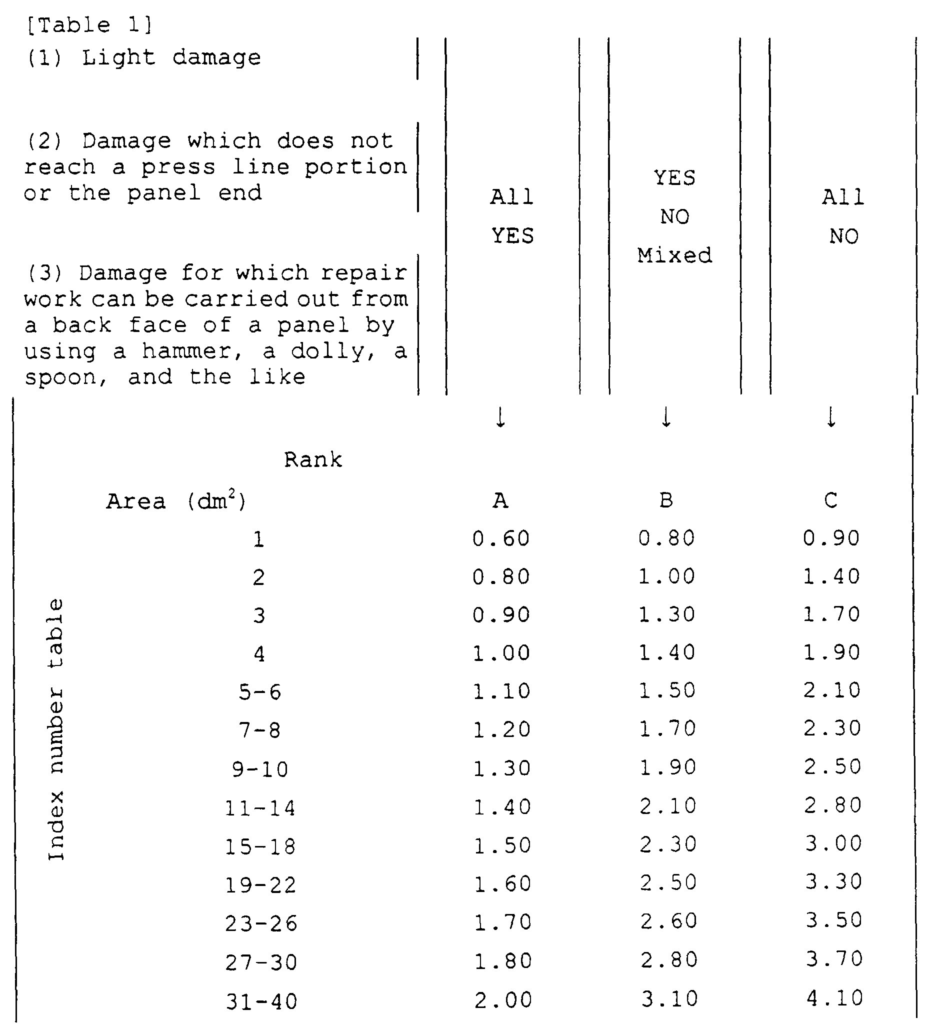

Regarding degrees of difficulty (1) to (3), YES or NO is judged for each damage and an index value is retrieved.

Here light damage refers to damage in which an area of one damage is 3 dm² or less and serious bend, seriously crushed or elongated portion, and the like are not found. If there are a plurality of damaged portions on the same panel, a rank is determined for each damaged portion and a table of a higher rank is used. A total area is used as the area to retrieve the index value.

Damage for which repair work can be carried out from a back face of a panel by using a hammer or the like includes damage for which repair work can be carried out by detaching fittings.

A case in which a plurality of damaged portions are included in the same panel is handled as follows. Damage on the back face of the panel is handled similarly to damage on the surface of the panel.

**[Table 2]**

| | | | | | |
|---|---|---|---|---|---|
| Damaged position | 1 | 2 | 3 | 4 | Whole |
| Difficulty | B | B | C | C | C |
| Area | S₁ | S₂ | S₃ | S₄ | S₁+S₂+S₃+S₄ |

Next, in the arithmetical unit 1a₂ which has read these standards from the memory 1b, the kind, position, and range of the damage are specified and the data is stored in the data portion 1b₂ as the data of the vehicle to be repaired.

Furthermore, a wage and a price of a part necessary for refit are determined and a cost of refit is displayed on the display 6. Here, not only the cost of refit but also a cost of replacement is calculated at the same time, and the costs are displayed in contrast with each other.

It is possible to select a new genuine part or a used genuine part for use as a part of refit, and to select the super course or economy course as the repair course in addition to the initially set first course.

In this manner, criteria for judgement corresponding to each position to be repaired can be clearly displayed to the user. Therefore, it is possible to easily meet the user demand for changes.

Although not shown, it is also possible not only to perform a calculation of costs of replacement or refit but also to provide work instructions to a worker or the like who carries out repair work.

When one of the respective courses such as the super course or economy course is selected and a cost of the selected course is being estimated, it is possible to cause the PC 1 to estimate costs of the selected course and the other courses in parallel while displaying only estimation processing of the selected course on the display 6. In this case, it is possible to immediately display estimation of a course, other than the initially selected course, on the display 6 during or after the estimation processing, in response to a direction of the operator.

As described above, the memory stores detail of repair in the past of the vehicle to be repaired as the historical data and the PC 1 can calculate the vehicle repair cost by handling the historical data as a part of the repair condition data.

The memory stores detail of repair in the past of the vehicle of the same type as the vehicle to be repaired as the historical data and the PC 1 can calculate the vehicle repair cost by handling the historical data as a part of the repair condition data.

The PC 1 can specify a shape of the damage in addition to the damaged position of the vehicle. The memory stores a plurality of mark data corresponding to the kinds of the damage and the PC 1 can identify detail of the damage based on the mark data designated on the vehicle attribute data or the data of the vehicle to be repaired displayed on the display 6.

The PC 1 can specify detail of the repair of the vehicle to be repaired based on the specified kind of the damage and the vehicle attribute data.

The PC 1 can analyze an area of the damage at the damaged position based on the mark data, a shape (size) of which can be changed and which is displayed on the vehicle attribute data or the data of the vehicle to be repaired displayed on the display 6.

The PC 1 can display detail of a plurality of kinds of repair work for restoring the damage specified by the mark data on the display 6 as references.

The PC 1 can display detail of a plurality of kinds of predetermined repair work out of detail of the plurality of kinds of repair work at the same time on the display 6.

Detail of the plurality of kinds of repair work displayed by the PC 1 may include refit work, replacement work, and coating work.

Detail of the plurality of kinds of work displayed by the PC 1 may include work in respective ranks in which the same work is ranked in a plurality of ranks.

Detail of repair work displayed by the PC 1 may include repair cost data of detail of each work.

The PC 1 can prepare a further specific estimation of detail of the work selected from the plurality of kinds of work displayed on the display.

The PC 1 can specify detail of the repair further, specifically with regard to detail of the work selected from the plurality of kinds of work displayed on the display 6.

Although the damaged position, the area of the damage, and the specific shape of the damage have been described as examples of the kind (detail) of the damage, it is possible to specify also a degree, an appearance, a depth, and the like of the damage.

## Claims

1. A vehicle repair cost estimating system for estimating a repair cost of a vehicle to be repaired comprising:
an input device for inputting data of said vehicle to be repaired;
a memory for storing vehicle attribute data;
a display for displaying each of said data; and
a calculating device for retrieving from said memory said vehicle attribute data corresponding to said input data of said vehicle to be repaired so as to display said vehicle attribute data on said display, wherein
said memory stores division data as said vehicle attribute data, said division data being set for each region of said vehicle for dividing each region into respective areas based on a predetermined condition and for setting a repair condition corresponding to each area, and
said calculating device has specifying means for specifying a damaged position of said vehicle, determining means for determining to which area set in each region said specified damaged position belongs, and estimating means for calculating said repair cost based on repair condition data of said area determined by said determining means.

2. A vehicle repair cost estimating system according to claim 1, wherein said specifying means specifies a shape of damage in addition to specifying said damaged position of said vehicle.

3. A vehicle repair cost estimating system according to claim 1 or 2, wherein
said memory stores a plurality of mark data corresponding to kinds of said damage, and
said specifying means specifies detail of said damage based on said mark data designated on said vehicle attribute data or on said data of said vehicle to be repaired displayed on said display.

4. A vehicle repair cost estimating system according to any one of claims 1 to 3, wherein
said division data divides each region into an outer area extending from an outer peripheral end of said region inwardly for a predetermined distance, and an inner area which lies inwardly for a distance longer than said predetermined distance from said outer peripheral end of said region, and
a range from said damaged position to its nearest end is set as a coating range when said damaged position is included in said outer area.

5. A vehicle repair cost estimating system according to any one of claims 1 to 3, wherein
said division data divides each region into an adjacent area extending from other region adjacent to said region for a predetermined distance, and a non-adjacent area at a distance longer than said predetermined distance from said other adjacent region, and
a predetermined range of a region adjacent to said damaged position is set as a coating range when said damaged position is included in said adjacent area.

6. A vehicle repair cost estimating system for estimating a repair cost of a vehicle to be repaired comprising:
an input device for inputting data of said vehicle to be repaired;
a memory for storing vehicle attribute data;
a display for displaying each of said data; and
a calculating device for retrieving from said memory said vehicle attribute data corresponding to said input data of said vehicle to be repaired so as to display said vehicle attribute data on said display, wherein
said calculating device has specifying means for specifying a damaged position and a shape of damage of said vehicle, division means for dividing each region into a near area extending from an outer periphery of said designated shape of said damage outwardly for a predetermined distance, and a far area which lies outwardly for a distance longer than said predetermined distance from said outer periphery of said damaged position, and estimating means for calculating said repair cost by including said near area in a coating region.

7. A vehicle repair cost estimating system according to claim 6, wherein
said memory stores a plurality of mark data corresponding to kinds of said damage, and
said specifying means of said calculating device specifies detail of said damage based on said mark data designated on said vehicle attribute data or on said data of said vehicle to be repaired displayed on said display.

8. A computer-readable medium wherein a program is recorded in a computer comprising:
an input device for inputting data of a vehicle to be repaired;
a memory for storing vehicle attribute data including division data set for each region of said vehicle for dividing each region into respective areas based on a predetermined condition and for setting a repair condition corresponding to each area; and
a display for displaying each of said data, said program being recorded for:
retrieving from said memory said vehicle attribute data corresponding to said input data of said vehicle to be repaired so as to display said retrieved vehicle attribute data on said display;
specifying a damaged position of said vehicle to determine to which area set in each region said specified damaged position belongs; and
calculating a repair cost based on repair condition data of said determined area.

9. A vehicle repair cost estimating system for estimating a repair cost of a vehicle to be repaired comprising:
an input device for inputting data of said vehicle to be repaired;
a memory for storing vehicle attribute data including division data set for each region of said vehicle for dividing each region into respective areas based on a predetermined condition and for setting a repair condition corresponding to each area, adjacent region data for setting which region is adjacent to each region, and vehicle specification data including image data of each region;
a display for displaying each data; and
a calculating device having specifying means for specifying a damaged position of said vehicle, determining means for determining to which area set in each region said specified damaged position belongs, and estimating means for calculating said repair cost based on repair condition data of said area determined by said determining means, said calculating device retrieves from said memory said vehicle attribute data corresponding to said data of said vehicle to be repaired input by said input device so as to display said image data of said region to which said damaged position specified by said specifying means belongs on said display, and displaying said image data of adjacent region with said image data of said region when said repair condition data of said area determined by said determining means includes work data of said adjacent region.

10. A vehicle repair cost estimating system according to claim 9, wherein
said memory stores detail of past repair of said vehicle to be repaired as historical data, and
said calculating device calculates said vehicle repair cost by handling said historical data as a part of said repair condition data.

11. A vehicle repair cost estimating system according to claim 9, wherein
said memory stores detail of past repair of a vehicle of the same type as said vehicle to be repaired as historical data, and
said calculating device calculates said vehicle repair cost by handling said historical data as a part of said repair condition data.
